# EUROPEAN PATENT APPLICATION

(11) **EP 4 509 573 A1**
(43) Date of publication of application: **19.02.2025**
(21) Application number: 22937271.9
(22) Date of filing: 09.12.2022
(51) Int. Cl.: C09J 123/20, C09J 11/04, C09J 11/08

(54) **VISCOELASTIC ANTICORROSIVE ADHESIVE, PREPARATION METHOD THEREFOR, AND APPLICATION THEREOF**

(30) Priority: 11.04.2022 CN 202210376244
(71) Applicant: Ancorro Co., Ltd., Chengdu, Sichuan 610199 (CN)
(72) Inventor: LEI, Jian, Chengdu, Sichuan 810008 (CN); ZHANG, Yu, Chengdu, Sichuan 810008 (CN); JIANG, Hong, Chengdu, Sichuan 810008 (CN); WANG, Yayong, Chengdu, Sichuan 810008 (CN); SONG, Xiaolong, Chengdu, Sichuan 810008 (CN)
(74) Representative: Ipey
(86) International application number: PCT/CN2022/137903
(87) International publication number: WO 2023/197641

(57) **Abstract**

The present invention discloses a viscoelastic anti-corrosion adhesive, and its preparation method and application. The viscoelastic anti-corrosion adhesive comprises the following components in parts by weight: 30-40 parts of polyisobutylene, 55-65 parts of inorganic filler, 1-2 parts of a composite of silicon oxide and polyamide wax, and 0-2 parts of an anti-aging agent. The polyisobutylene mainly consists of polyisobutylene with a molecular weight of 30,000-50,000 and polyisobutylene with a molecular weight of 80,000-100,000, and the molecular weight of the polyisobutylene after mixing is 50,000-80,000, which exhibits strong cohesion and wetting ability between polyisobutylene molecules, thereby avoiding the occurrence of "over cold flow" phenomena.

## Description

### Technical Field

The present invention relates to the field of adhesive technology, and more particularly to a viscoelastic anti-corrosion adhesive and its preparation method and application.

### Background Technology

Viscoelastic anti-corrosion material is a flexible polymer anti-corrosion material, which possesses a unique property of cold flow, that is, it can penetrate into the microsurface of the substrate under certain time and external force through cold flow action, fill gaps, and improve bonding. This property gives it excellent waterproof sealing and outstanding adhesion, effectively bonding various substrates, and thus achieving the purpose of preventing corrosion by isolating air and moisture.

Some domestic manufacturers have conducted research and production on viscoelastic anti-corrosion materials. However, according to research and verification results, domestically produced viscoelastic anti-corrosion materials have problems such as bonding and sealing failure and dripping. Further research and testing have shown that the most difficult aspect of viscoelastic anti-corrosion materials lies in maintaining the cold flow characteristics of the material without causing "over cold flow" which leads to dripping and flowing phenomena. However, current viscoelastic anti-corrosion materials still cannot find a balance point in this performance, thus greatly reducing the anti-corrosion effect.

### Summary of the Invention

The present invention aims to solve the problem that existing viscoelastic anti-corrosion materials cannot find a corresponding balance point between cold flow characteristics and "over cold flow", resulting in poor anti-corrosion effects. The present invention provides a viscoelastic anti-corrosion adhesive, which has both cold flow characteristics and does not "over cold flow", and has good anti-corrosion effects.

On one hand, the present invention provides a viscoelastic anti-corrosion adhesive, comprising the following components in parts by weight: 30-40 parts of polyisobutylene, 55-65 parts of inorganic filler, 1-2 parts of a composite of silicon oxide and polyamide wax, and 0-2 parts of an anti-aging agent.

Wherein, the polyisobutylene (with a molecular weight of 50,000-80,000) is mainly composed of polyisobutylenes with a molecular weight of 30,000-50,000 and polyisobutylenes with a molecular weight of 80,000-100,000.

Furthermore, it is limited that the composite of silicon oxide and polyamide wax is mainly composed of vapor-phase silicon dioxide and polyamide wax micro-powder in a mass ratio of 0.1-1.5: 0.5-2.0.

Furthermore, it is limited that the mass ratio of vapor-phase silicon dioxide to polyamide wax micro-powder is 1: 1.

Furthermore, it is limited that the mass ratio of polyisobutylenes with molecular weights of 30,000-50,000 and 80,000-100,000 is 3-17: 20.

Furthermore, it is limited that the inorganic filler is selected from at least one of sulfate, phosphate, and carbonate.

Furthermore, it is limited that the mentioned anti-aging agent is hindered phenol binary anti-aging agent.

The beneficial effects of the present invention are as follows:
1. The polyisobutylene's cold flow characteristics remain unaffected by using the composite of silicon oxide and polyamide wax, thus preventing "over cold flow" during usage, and avoiding dripping and flowing.
2. The molecular weight of polyisobutylene after mixing is controlled between 50,000-80,000, and the polyisobutylene has strong cohesion and the ability to wet the substrate, thus preventing the occurrence of "over cold flow" phenomena.
3. The viscoelastic anti-corrosion adhesive obtained by the present invention has excellent anti-corrosion performance, thus having promising applications as corrosion-resistant sealing materials in the petroleum and natural gas industry and pipelines and irregular steel structures in chemical enterprises.

On the other hand, the present invention also provides a preparation method for the viscoelastic anti-corrosion adhesive. The preparation method comprises: mixing the polyisobutylene, inorganic filler, composite of silicon oxide and polyamide wax, and anti-aging agent, then heating to 90-110°C, followed by dispersing the mixture at different speeds multiple times, and finally cooling it to 60-70°C for extrusion molding.

Furthermore, it is further specified that the method thereof also includes revolution mixing before or simultaneously with dispersion, with a revolution mixing speed of 0.3m/s-0.5m/s. Preferably, during the multiple dispersal steps, the dispersion speed is 30m/s-50m/s. Moreover, the final dispersion is conducted in a vacuum environment.

The beneficial effects of the present invention are:
By dispersing multiple times at different dispersion speeds, the composite of silicon oxide and polyamide wax can fully encapsulate polyisobutylene, achieving resistance to both acids and alkalis. During preparation, polyisobutylene does not decompose or volatilize, and its molecular weight is controlled within the ideal range, thus ensuring that the prepared viscoelastic anti-corrosion adhesive has excellent anti-corrosion properties and suitable cold flow performance.

### Detailed Description of the Invention

The viscoelastic anti-corrosion adhesive provided by the present invention can be used as an adhesive, specifically applied to one side of transparent tape or the surface of other objects that need to be bonded, achieving sealing or bonding between two objects to form a cohesive unit. As used herein, "viscoelastic" or "viscoelasticity" refers to the deformation mechanism that simultaneously exhibits both elasticity and viscosity, reflecting the material with the characteristics of both viscous fluids and elastic solids. As used herein, the "anti-corrosion adhesive" refers to a specially formulated, high molecular weight adhesive for joints, which can be used as an insulating compound and anti-corrosion agent.

The viscoelastic anti-corrosion adhesive of the present invention has excellent cold flow characteristics and does not drip or flow. As used herein, "cold flow characteristics" refers to the ability of viscoelastic materials to completely fill gaps in pipelines under certain external forces through their own cold flow action, preventing moisture and air infiltration. "Dripping" refers to the phenomenon where viscoelastic materials undergo slipping or sliding under certain external forces and temperatures, resulting in thinning of the layer, while "flowing" refers to the phenomenon where viscoelastic materials turn into a liquid state under certain external forces and temperatures, resulting in loss of the adhesive layer and corrosion protection failure.

On one hand, the viscoelastic anti-corrosion adhesive provided by the present invention can comprise the following components in parts by weight: 30-40 parts of polyisobutylene, 55-65 parts of inorganic filler, 1-2 parts of a composite of silicon oxide and polyamide wax, and 0-2 parts of an anti-aging agent. The polyisobutylene (with a molecular weight of 50,000-80,000) is mainly composed of polyisobutylenes with a molecular weight of 30,000-50,000 and polyisobutylenes with a molecular weight of 80,000-100,000. As used herein, "polyisobutylene" refers to a polymer obtained by the cationic polymerization of isobutylene, with a molecular weight ranging from hundreds to millions. It is a typical saturated linear polymer with no double bonds in the main chain and no long side chains. Its structural unit is - (CH2-C(CH3)2)-, with no asymmetric carbon atoms, and the structural units are connected in a regular sequence from head to tail. The "composite of silicon oxide and polyamide wax" refers to a mixture formed by mixing silicon oxide and polyamide wax micro-powder in certain proportions, such as a mass ratio of silicon oxide to polyamide wax micro-powder of 0.1-1.5: 0.5-2.0, preferably 1:1. The "silicon oxide" refers to silicon dioxide, preferably silicon dioxide obtained by the vapor-phase method, which is briefly referred to as "vapor-phase silicon dioxide". The "polyamide wax micro-powder" refers to powder that is obtained by pulverizing the polyamide wax solid directly or by cooling and solidifying the molten liquid wax. As used in the present invention, the composite of silicon oxide and polyamide wax ensures that polyisobutylene maintains its cold flow characteristics without experiencing "over cold flow", i.e., dripping or flowing. This is mainly because both silicon oxide and polyamide wax forming a three-dimensional network structure, which deforms under stress to produce cold flow. When the stress weakens or disappears, the three-dimensional structure reforms to prevent the material from "over cold flow". However, excessive addition of silicon oxide may be affected by alkali resistance, and the dispersibility of polyamide wax micro-powder is not as good as silicon oxide. Therefore, a combination of both is considered.

The polyisobutylene used in the viscoelastic anti-corrosion adhesive of the present invention can avoid the occurrence of "over cold flow" phenomena. In some specific embodiments, the polyisobutylene is mainly composed of polyisobutylenes with molecular weights of 30,000-50,000 and 80,000-100,000, with a mass ratio between them of 3-17:20, preferably 5:10. Polyisobutylenes with a molecular weight of 30,000-50,000 exhibit excellent cold flow characteristics, gas tightness, waterproofness, and initial adhesion, which can initially wet the substrate surface. Polyisobutylenes with a molecular weight of 80,000-100,000 exhibit excellent cold flow characteristics, gas tightness, waterproofness, and sustained adhesion, enhancing the material's cohesion. As used herein, "substrate" refers to materials such as plastics, rubber, and metals, while the "material" refers to the viscoelastic anti-corrosion adhesive.

The inorganic filler used in the viscoelastic anti-corrosion adhesive of the present invention, also known as filler, additive or filling material, is added to improve material properties, increase capacity or weight, and reduce material costs. The inorganic filler includes but is not limited to at least one of sulfate, phosphate, and carbonate, which can be mixed in certain mass ratios, such as proportional mixing, or mixing of any two in certain mass ratios, or using only one of the three.

The anti-aging agent used in the viscoelastic anti-corrosion adhesive of the present invention is primarily used to prevent the decomposition and volatilization of polyisobutylene during preparation and storage, thus controlling the molecular weight of polyisobutylene within the appropriate range to achieve the desired effects. The anti-aging agent includes but is not limited to hindered phenol binary anti-aging agent. The hindered phenol binary anti-aging agent refers to phenolic compounds containing at least two phenolic hydroxyl groups, such as but not limited to RGANOX 1010 and RGAFOS 168. Whether the anti-aging agent is added and the specific amount added is determined based on the molecular weight of polyisobutylene and the mixing temperature.

On the other hand, the viscoelastic anti-corrosion adhesive according to the present invention can be prepared as follows:
S1. Mix the polyisobutylene, inorganic filler, composite of silicon oxide and polyamide wax with the antioxidant and heat the mixture to 90-110°C.
S2. Then disperse multiple times at different dispersion speeds, and then cool to 60-70°C for extrusion molding. The temperature during the dispersion process is determined by the dispersion speed, revolution velocity, and polyisobutylene.

To ensure that the composite of silicon oxide and polyamide wax are fully encapsulated by the polyisobutylene, resulting in a viscoelastic anti-corrosion adhesive with good acid and alkali resistance, multiple dispersion processes are carried out in step S2, with the dispersion not less than 2 times, preferably 2 times. The dispersion speed during the first dispersion is 30 m/s-50 m/s, preferably 30 m/s-40 m/s, and the dispersion speed during the last dispersion is greater than that of the first time, preferably 40 m/s-50 m/s, more preferably 50 m/s. The last dispersion is carried out in a vacuum environment, and the dispersion time of the first dispersion is 3-4 hours, preferably 4 hours. The dispersion time of the last dispersion is not less than 30 minutes, preferably 50 minutes.

To improve encapsulation performance, the mixture obtained in step S1 is subjected to rotational mixing before the first dispersion, with a rotational mixing speed of 0.3 m/s-0.5 m/s, preferably 0.5 m/s, and a rotational mixing time of 20-40 minutes, preferably 30 minutes; Preferably, multiple dispersions are carried out simultaneously after revolution for 20-40 minutes to achieve mixing purposes, and the mixing time is 3-4 hours.

To control the molecular weight of polyisobutylene in the finished product, the extrusion temperature of the extruded mixture during extrusion molding after the last dispersion is completed is 60-70°C, preferably 65°C.

### Embodiment 1:

The viscoelastic anti-corrosion adhesive in this Embodiment includes the following components, measured by weight: 37 parts of medium molecular weight polyisobutylene, 61 parts of inorganic filler, and 2 parts of a composite of silicon oxide and polyamide wax.

Wherein, the medium molecular weight polyisobutylene in this Embodiment comprises 21 parts of medium molecular weight polyisobutylene with a molecular weight of 30,000-50,000 and 16 parts of medium molecular weight polyisobutylene with a molecular weight of 80,000-100,000. The molecular weight of the polyisobutylene after compounding is 60,000-70,000. The inorganic filler includes a mixture of calcium carbonate and barium sulfate in proportion. The composite of silicon oxide and polyamide wax is a mixture of vapor-phase silicon dioxide and polyamide wax micro-powder in proportion.

The preparation method for the viscoelastic anti-corrosion adhesive in this Embodiment comprises the following steps:
After heating the material pot to 90°C, mix polyisobutylene, inorganic filler, and the composite of silicon oxide and polyamide wax in the material pot. Use a dual-planetary mixer for mixing by setting the revolution velocity of the stirring rod to 0.4 m/s. After mixing for 30 minutes, then set the dispersion speed of the stirring rod to 37- 43m/s after mixing for 3 hours. Maintain a vacuum in the material pot and set the dispersion speed to 55m/s for another 30 minutes to obtain mixed gel. Throughout the mixing process, take measures to maintain the material temperature at 120°C. After cooling the mixed gel, extrude and mold it at a temperature of 60°C.

### Embodiment 2:

The viscoelastic anti-corrosion adhesive in this Embodiment comprises the following components, measured by weight: 37 parts of medium molecular weight polyisobutylene, 61 parts of inorganic filler, and 2 parts of composite of silicon oxide and polyamide wax.

Wherein, the medium molecular weight polyisobutylene in this Embodiment consists of 32 parts of medium molecular weight polyisobutylene with a molecular weight of 30,000-50,000 and 5 parts of medium molecular weight polyisobutylene with a molecular weight of 80,000-100,000. The molecular weight of the polyisobutylene after compounding is 50,000-60,000. The inorganic filler includes a mixture of calcium carbonate and barium sulfate in proportion. The composite of silicon oxide and polyamide wax is a mixture of vapor-phase silicon dioxide and polyamide wax micro-powder in proportion.

The preparation method for the viscoelastic anti-corrosion adhesive in this Embodiment comprises the following steps:
After heating the material pot to 100°C, mix polyisobutylene, inorganic filler, and the composite of silicon oxide and polyamide wax in the material pot. Use a dual-planetary mixer for mixing by setting the revolution velocity of the stirring rod to 0.5m/s. After mixing for 30 minutes, then set the dispersion speed of the stirring rod to 44-50 m/s after mixing for 3 hours. Maintain a vacuum in the material pot and set the dispersion speed to 55m/s for another 30 minutes to obtain mixed gel. Throughout the mixing process, take measures to maintain the material temperature at 100°C. After cooling the mixed gel, extrude and mold it at a temperature of 70°C.

### Embodiment 3:

The viscoelastic anti-corrosion adhesive in this Embodiment comprises the following components, measured by weight: 37 parts of medium molecular weight polyisobutylene, 61 parts of inorganic filler, 2 parts of a composite of silicon oxide and polyamide wax, and 2 parts of an anti-aging agent.

Wherein, the medium molecular weight polyisobutylene in this Embodiment consists of 5 parts of medium molecular weight polyisobutylene with a molecular weight of 30,000-50,000 and 32 parts of medium molecular weight polyisobutylene with a molecular weight of 80,000-100,000. The molecular weight of the polyisobutylene after compounding is 70,000-80,000. The inorganic filler includes a mixture of calcium carbonate and barium sulfate in proportion. The composite of silicon oxide and polyamide wax is a mixture of vapor-phase silicon dioxide and polyamide wax micro-powder in proportion. The anti-aging agent is a hindered phenol binary anti-aging agent.

The preparation method for the viscoelastic anti-corrosion adhesive in this Embodiment comprises the following steps:
After heating the material pot to 100°C, mix polyisobutylene, inorganic filler, the composite of silicon oxide and polyamide wax, and anti-aging agent in the material pot. Use a dual-planetary mixer for mixing by setting the revolution velocity of the stirring rod to 0.3 m/s. After mixing for 30 minutes, then set the dispersion speed of the stirring rod to 30-36 m/s after mixing for 3 hours. Maintain a vacuum in the material pot and set the dispersion speed to 55 m/s for another 30 minutes to obtain mixed gel. Throughout the mixing process, take measures to maintain the material temperature at 150°C. After cooling the mixed gel, extrude and mold it at a temperature of 65°C.

### Embodiment 4:

The viscoelastic anti-corrosion adhesive in this Embodiment comprises the following components, measured by weight: 37 parts of medium molecular weight polyisobutylene, 61 parts of inorganic filler, and 2 parts of a composite of silicon oxide and polyamide wax.

Wherein, the medium molecular weight polyisobutylene in this Embodiment comprises 21 parts of medium molecular weight polyisobutylene with a molecular weight of 30,000-50,000 and 16 parts of medium molecular weight polyisobutylene with a molecular weight of 80,000-100,000. The molecular weight of the polyisobutylene after compounding is 60,000-70,000. The inorganic filler is calcium carbonate. The composite of silicon oxide and polyamide wax is a mixture of vapor-phase silicon dioxide and polyamide wax micro-powder in proportion.

The preparation method for the viscoelastic anti-corrosion adhesive in this Embodiment is consistent with that of Embodiment 1.

### Embodiment 5:

The viscoelastic anti-corrosion adhesive in this embodiment comprises, by weight, 37 parts of medium molecular weight polyisobutylene, 61 parts of inorganic filler, and 2 parts of a composite of silicon oxide and polyamide wax.

Wherein the medium molecular weight polyisobutylene includes 21 parts of medium molecular weight polyisobutylene with a molecular weight of 30,000-50,000 and 15 parts of medium molecular weight polyisobutylene with a molecular weight of 80,000-100,000, the molecular weight of the polyisobutylene after compounding is 60,000- 70,000. The inorganic filler is barium sulfate. The composite of silicon oxide and polyamide wax consists of silicon dioxide obtained by vapor-phase method and polyamide wax micropowder mixed in proportional ratios.

The preparation method for the viscoelastic anti-corrosion adhesive in this Embodiment is consistent with that of Embodiment 1.

### Embodiment 6:

The formula of this Embodiment is consistent with that of Embodiment 1.

The preparation method for the viscoelastic anti-corrosion adhesive in this Embodiment comprises the following steps:
After heating the material pot to 100°C, mix polyisobutylene, inorganic filler, and the composite of silicon oxide and polyamide wax in the material pot. Use a dual-planetary mixer for mixing by setting the revolution velocity of the stirring rod to 0.5 m/s. After mixing for 30 minutes, then set the dispersion speed of the stirring rod to 44-50 m/s after mixing for 4 hours. Maintain a vacuum in the material pot and set the dispersion speed to 60 m/s for another 30 minutes to obtain mixed gel. Throughout the mixing process, take measures to maintain the material temperature at 135°C. After cooling the mixed gel, extrude and mold it at a temperature of 70°C.

### Comparative Example 1

The formula and preparation method for the viscoelastic anti-corrosion adhesive in this example is similar to that of Embodiment 1 except that polyisobutylene with a molecular weight of 30,000-50,000 is added.

### Comparative Example 2

The formula and preparation method for the viscoelastic anti-corrosion adhesive in this example is similar to that of Embodiment 1 except that polyisobutylene with a molecular weight of 80,000 to 100,000 is added.

### Comparative Example 3

The formula and preparation method for the viscoelastic anti-corrosion adhesive in this example is similar to that of Embodiment 1 except that vapor-phase silicon dioxide is added.

### Comparative Example 4

The formula and preparation method for the viscoelastic anti-corrosion adhesive in this example is similar to that of Embodiment 1 except that polyamide wax micro-powder is added.

### Comparative Example 5

5 parts of butyl rubber, 8 parts of high molecular weight polyisobutylene (molecular weight of polyisobutylene is greater than 100,000), 30 parts of medium molecular weight polyisobutylene, 15 parts of low molecular weight polyisobutylene (molecular weight of polyisobutylene is less than 30,000), 40 parts of inorganic reinforcing powder calcium carbonate, 0.5 part of antioxidant 1010, 0.5 part of anti-aging agent 264, 1.0 part of phthalocyanine green, and the preparation method is consistent with that of Embodiment 3.

### Comparative Example 6

The formula of the viscoelastic anti-corrosion adhesive in this example is similar to that of Embodiment 1 except that the preparation method thereof is different.

The preparation method for the viscoelastic anti-corrosion adhesive in this Embodiment comprises the following steps:
After heating the material pot to 100°C, mix polyisobutylene, inorganic filler, and the composite of silicon oxide and polyamide wax in the material pot. Use a dual-planetary mixer for mixing by setting the revolution velocity of the stirring rod to 0.2 m/s. After mixing for 30 minutes, then set the dispersion speed of the stirring rod to 20 m/s after mixing for 3 hours to obtain mixed gel. Throughout the mixing process, take measures to maintain the material temperature at 150°C. After cooling the mixed gel, extrude and mold it at a temperature of 70°C.

The test results for the tapes wrapped on the pipeline surface for Embodiment 1-6 and Comparative Example 1-6 are shown in Table 1.

**Table 1**

| Test items | Embodiment 1 | Embodiment 2 | Embodiment 3 | Embodiment 4 | Embodiment 5 | Embodiment 6 |
|---|---|---|---|---|---|---|
| Peel strength/N/cm | 4.7 | 3.1 | 7.9 | 4.5 | 4.8 | 4.9 |
| Peel coverage rate/% | 100 | 99 | 96 | 100 | 100 | 100 |
| Dripping at 90°C (48h) | No | No | No | No | No | No |
| Chemical immersion (90 days) | No change | No change | No change | No change | No change | No change |
| Test items | Comparative example 1 | Comparative example 2 | Comparative example 3 | Comparative example 4 | Comparative example 5 | Comparative example 6 |
| Peel strength/N/cm | 8.9 | 1.9 | 4.3 | 4.4 | 9.7 | 2.4 |
| Peel coverage rate/% | 87 | 95 | 99 | 100 | 65 | 70 |
| Dripping at 90°C (48h) | No | Yes | Yes | No | Yes | No |
| Chemical immersion (90 days) | No change | No change | No change | decompositio n | Non decompositio n | Non decompositi on |

It can be seen from Table 1 that the viscoelastic anti-corrosion adhesive layers produced from Embodiments 1-6 exhibit good peel strength and peel coverage, and they do not drip at high temperatures or decompose when immersed in chemical media. They meet the performance index requirements of ISO 21809-3:2016 External coatings for buried or submerged pipelines used in pipeline transportation systems - Part 3: Field joint coatings and GB/T 51241-2017 performance index requirements for viscoelastic anti-corrosion materials.

Comparing Embodiment 1 with Comparative Examples 1 and 2, it can be observed that polyisobutylene with a molecular weight of 80,000 -100,000 significantly affects the peel strength and peel coverage of the viscoelastic anti-corrosion adhesive layer. Specifically, the peel strength is significantly enhanced while the peel coverage is noticeably reduced. Polyisobutylene with a molecular weight of 30,000-50,000 significantly influences the peel strength and dripping performance at 90°C of the viscoelastic anti-corrosion adhesive layer. Specifically, the peel strength is significantly reduced, and dripping occurs at 90°C, which does not meet the non-dripping performance requirements. Therefore, it can be concluded that using polyisobutylene with molecular weights of 80,000- 100,000 and 30,000-50,000 can significantly adjust the peel strength and peel coverage, helping to achieve an appropriate peel strength range and close to 100% peel coverage.

Comparing Embodiment 1 with Comparative Examples 3 and 4, it can be observed that vapor-phase silicon dioxide and polyamide wax micro-powder do not significantly affect the peel strength and peel coverage of the viscoelastic anti-corrosion adhesive layer. However, they do have some impact on the dripping performance at 90°C or the chemical media immersion performance (90 days). Specifically, vapor-phase silicon dioxide affects the chemical media immersion performance (90 days), causing decomposition when added alone, resulting in poor corrosion resistance. Polyamide wax micro-powder affects the dripping performance at 90°C; when added alone, it cannot meet the dripping performance requirements at 90°C and dripping occurs.

Comparing Embodiment 3 with Comparative Example 5, it can be seen that the peel strength, peel coverage, and dripping performance at 90°C of the adhesive layer formed by the existing viscoelastic anti-corrosion adhesive coating do not meet the requirements.

Comparing Embodiment 1 with Comparative Example 6, due to the different preparation methods, the peel strength, peel coverage, dripping performance at 90°C, and chemical media immersion performance (90 days) of the viscoelastic anti-corrosion adhesive layer do not meet the requirements. Specifically, different dispersion speeds, final dispersion in a vacuum environment, settings for revolution mixing, and simultaneous mixing with dispersion will all affect the peel strength, peel coverage, dripping performance at 90°C, and chemical media immersion performance (90 days) of the viscoelastic anti-corrosion adhesive layer.

In summary, the composite of silicon oxide and polyamide wax can prevent "over cold flow" without affecting the cold flow characteristics of polyisobutylene, thereby preventing dripping and flowing during use. Polyisobutylene with a molecular weight controlled between 50,000 and 80,000 exhibits strong cohesion and wetting ability between molecules, thus avoids the occurrence of "over cold flow" phenomena. The viscoelastic anti-corrosion adhesive obtained by the present invention has excellent anti-corrosion performance, making it suitable as anti-corrosion sealing material for pipelines and irregular steel structures in the petroleum and natural gas industry and chemical enterprises. By setting different dispersion speeds for multiple dispersions, the composite of silicon oxide and polyamide wax can fully encapsulate polyisobutylene, achieving both acid and alkali resistance. During preparation, polyisobutylene does not undergo decomposition or volatilization, and its molecular weight is controlled within the ideal range, ensuring that the viscoelastic anti-corrosion adhesive obtained has good anti-corrosion and suitable cold flow properties.

Finally, it should be noted that the above-described embodiments are only preferred Embodiments of the present invention and are not intended to limit the scope of the present invention. Any modifications, equivalent replacements, improvements, etc., made within the spirit and principle of the present invention should be included within the protection scope of the present invention.

## Claims

1. A viscoelastic anti-corrosion adhesive, **characterized by** comprising the following components in weight percentages: 30-40 parts of polyisobutylene, 55-65 parts of inorganic filler, 1-2 parts of a composite of silicon oxide and polyamide wax, and 0-2 parts of an anti-aging agent;
Wherein the polyisobutylene is mainly composed of polyisobutylene with a molecular weight of 30,000-50,000 and polyisobutylene with a molecular weight of 80,000-100,000 mixed together, and the molecular weight of the polyisobutylene after mixing is 50,000-80,000.

2. The viscoelastic anti-corrosion adhesive according to claim 1, **characterized in that** the composite of silicon oxide and polyamide wax is mainly composed of vapor-phase silicon dioxide and polyamide wax micro-powder mixed in a mass ratio of 0.1-1.5: 0.5-2.0.

3. The viscoelastic anti-corrosion adhesive according to claim 2, **characterized in that** the mass ratio of vapor-phase silicon dioxide to polyamide wax micro-powder is 1:1.

4. The viscoelastic anti-corrosion adhesive according to claim 1, **characterized in that** the mass ratio of polyisobutylene with a molecular weight of 30,000-50,000 to polyisobutylene with a molecular weight of 80,000-100,000 is 3-17: 20.

5. The viscoelastic anti-corrosion adhesive according to claim 1, **characterized in that** the inorganic filler is selected from at least one of sulfate, phosphate, and carbonate.

6. The viscoelastic anti-corrosion adhesive according to claim 1, **characterized in that** the anti-aging agent is hindered phenol binary anti-aging agent.

7. A preparation method for the viscoelastic anti-corrosion adhesive according to any one of claims 1-6, **characterized in that** the preparation method comprises: mixing the polyisobutylene, inorganic filler, composite of silicon oxide and polyamide wax, and anti-aging agent, then heating to 90-110°C, followed by dispersing the mixture at different speeds multiple times, and finally cooling to 60-70°C for extrusion molding.

8. The preparation method according to claim 7, **characterized in that** before or simultaneously with the dispersion, revolution mixing is included, with the speed of 0.3m/s-0.5m/s.

9. The preparation method according to claim 7, **characterized in that** the dispersion speed after multiple dispersing steps at different dispersing speed is 30m/s- 50m/s; preferably, the final dispersion is conducted in a vacuum environment.

10. An application of the viscoelastic anti-corrosion adhesive according to any one of claims 1-6, being used as an anti-corrosion sealing material in pipelines and irregular steel structures in the petroleum and natural gas industry and chemical enterprises.
